# EUROPÄISCHE PATENTSCHRIFT

(11) **EP 0 914 761 B1**
(45) Veröffentlichungstag und Bekanntmachung des Hinweises auf die Patenterteilung: **11.12.2002**
(21) Anmeldenummer: 98120096.7
(22) Anmeldetag: 24.10.1998
(51) Int. Cl.: A01B 61/02, A01D 75/30

(54) **Trägerfahrzeug mit einer Aufhängung für beidseitig an diesem angebrachte Arbeitsaggregate**
Carrier vehicle with a suspension for working units being fixed on both sides
Véhicule de support avec suspension pour unités de travail montées aux deux cotés

(30) Priorität: 07.11.1997 DE 29719765 U
(43) Veröffentlichungstag der Anmeldung: 12.05.1999
(73) Patentinhaber: Maschinenfabrik Bernard Krone GmbH, 48480 Spelle (DE)
(72) Erfinder: Krone, Bernard, 48480 Spelle (DE); Horstmann, Josef, Dr.-Ing., 49479 Ibbenbüren (DE)

(56) Entgegenhaltungen:
- AU-A- 3 545 271
- DE-C- 4 405 858
- US-A- 2 682 740
- US-A- 4 370 846
- US-A- 4 497 160

## Beschreibung

Die Erfindung betrifft ein Trägerfahrzeug mit einer Aufhängung für beidseitig an diesem angebrachte Arbeitsaggregate nach dem Oberbegriff des Anspruches 1, welche vorzugsweise im landwirtschaftlichen und/oder kommunalen Bereich Anwendung finden. Dazu zählen beispielsweise Mähwerke, Mulcher oder Kehrgeräte, die in einer Kombination von Arbeitsaggregaten in ihrer Arbeitsstellung über große Arbeitsbreiten verfügen.

In der DE 44 05 858 C1 wird eine Aufhängung für ein- oder beidseitig an einem Trägerfahrzeug angebrachte Arbeitsaggregate vorgeschlagen, bei der die Arbeitsaggregate über einen um eine in Fahrtrichtung ausgerichtete Schwenkachse schwenkbar am Trägerfahrzeug gelagerten und sich in Arbeitsstellung quer zur Fahrtrichtung erstreckenden Ausleger sowie über einen sich daran anschließenden, um eine weitere in Fahrtrichtung zeigende Schwenkachse schwenkbar angelenkten Tragarm und einer nachfolgenden, auf einer Oberwand der Arbeitsaggregate angebrachten Aufhängung aufgehängt sind. Zur Überführung derartig aufgehängter Arbeitsaggregate aus der Arbeitsstellung in eine Transportstellung und umgekehrt ist eine kinematische Vorrichtung erforderlich, mit der gleichzeitig der am Fahrgestell schwenkbare Ausleger aus einer in etwa horizontalen Stellung nach unten verschwenkt, während der Tragarm mit dem daran angebrachten Arbeitsaggregat nach oben verschwenkt wird. Bei der vorstehend beschriebenen Aufhängung ist eine Anpassung bzw. Reduzierung der Auflagekraft der Arbeitsaggregate auf dem Erdboden (Arbeits- und Betriebsstellung) überhaupt nicht vorgesehen.

In der DE 83 18 249 U1 wird ein Frontmäher offenbart, bei dem jeweils wenigstens zwei nebeneinander angeordnete Mähtrommeln über sich in Arbeitsstellung quer zur Fahrtrichtung erstreckenden Auslegern beidseitig an einem Lagerbock des Frontmähers angebracht sind, wobei die Ausleger um in Fahrtrichtung zeigende Achsen aus der horizontalen Arbeitsstellung in eine vertikale Transportstellung hochklappbar sind. Zur Anpassung an Geländeabweichungen sind Befestigungsseile mit Dämpfungsfedern vorgesehen, die sich in etwa von der Mitte der Ausleger zu einem Befestigungspunkt am Lagerbock des Frontmähers erstrecken, so daß in der Arbeitsstellung eine bedingte Anpassung der Auflagekraft an unterschiedliche Bodenverhältnisse möglich ist. Wird jedoch die Stellung des Trägerfahrzeuges und damit auch die Stellung des Lagerbockes relativ zu den an den Auslegern gelagerten Mähtrommeln, beispielsweise beim einseitigen Durchfahren von Erdlöchern, Furchen oder dgl. verändert, so kann es vorkommen, daß die Federkraft zur Anpassung der Auflagekraft an einem Ausleger des Frontmähers soweit erhöht wird, daß die Mähtrommeln nicht mehr auf dem Erdboden aufliegen, während die Mähtrommeln des anderen Auslegers mit der maximalen Auflagekraft auf dem Erdboden aufliegen. In solchen Fällen können natürlich keine optimalen Arbeitsergebnisse erzielt werden.

Aus der AU-A-35452 ist eine Mähmaschine mit mehreren Messerwalzen bekannt, die in einer Grundausrüstung bei einer Mähbreite von etwa 2,4 m drei Messerwalzen als Mähereinheiten aufweist. In einer Transportstellung stützen sich alle Mähereinheiten auf einem mit drei antreibbaren Rädern ausgebildeten Fahrgestell auf dem Erdboden ab. Hierbei bilden eine Vorderachse mit an ihr befestigten Rädern zusammen mit einem nachlaufenden Hinterrad ein lenkbares, dreirädriges Fahrzeug für die Mähmaschine. In der Arbeitsstellung befindet sich in Fahrtrichtung etwa mittig vor jedem Rad der Vorderachse eine quer zur Fahrtrichtung ausgerichtete Messerwalze. Die Messerwalzen bzw. ihre Gehäuse sind an den einander zugeordneten Enden über einen Bügel, eine Schiene und weiteren Befestigungselementen miteinander und mit dem Fahrgestell schwenkbeweglich verbunden. Die dritte Messerwalze ist zusammen mit ihrem Gehäuse mittig zwischen der Vorderachse und dem nachlaufenden Hinterrad als selbständige Mähereinheit im freien Raum unter dem Fahrgestell angeordnet und an diesem schwenkbeweglich und federnd aufgehängt.
Damit über die Gewichtskraft der Mähereinheiten und ihrer Aufhängungen, insbesondere der beiden vorderen Messerwalzen infolge von unter den Messerwalzen angebrachter Gleitkufen, die Gefahr einer Grasnarbenbeschädigung vermieden wird und zur Arretierung in einer Transportstellung, in der die manuell einseitig angehobenen Messerwalzen in einer Ausrichtung von ca. 45° zum Erdboden angeordnet sind, werden die Messerwalzen bzw. die Mähereinheiten jeweils über eine Kette mit einem Schenkel eines als Winkelhebel ausgebildeten Tragarm verbunden bzw. an ihm aufgehängt. Letzterer ist wiederum für jede Messerwalze jedoch spiegelbildlich zueinander im Bereich seiner Schwenkverbindung schwenkbeweglich im Abstand zueinander auf jeweils einem in Fahrtrichtung ausgerichteten Bolzen an der Stirnseite des Fahrgestelles gelagert und arretiert. Zwischen den beiden freien Schenkeln der Tragarme befindet sich eine Druckfeder, die jeweils endseitig an einem Bolzen am Tragarm angreift. Die Druckfeder trägt dazu bei, daß bis zu 70 % der Gewichtskraft der Mähereinheit auf das Fahrgestell und damit auf die Räder der Vorderachse übertragen wird. Über die am Fahrgestell schwenkbeweglich gehalterten Tragarme in Verbindung mit der Druckfeder erfolgt auch eine gleichmäßige Gewichtsverteilung für einen gleichmäßigen Druck der Mähereinheiten auf der Grasnarbe. Des weiteren ist die Mähmaschine mittels eines Verlängerungsansatzes auf eine Mähbreite von ca. 3,80 m nachrüstbar, indem der mittig unter dem Fahrgestell angeordneten selbständigen Mähereinheit eine weitere Mähereinheit an beiden Seiten zugeordnet wird. Die zusätzlichen Mähereinheiten werden ebenfalls über Ketten mit Tragarmen in der Form eines Winkelhebels verbunden. Die Tragarme sind nun schwenkbeweglich an einer Verlängerungsschiene gehaltert.

Diese ist wiederum mittig über Befestigungselemente am unteren Rahmen des Fahrgestelles der Mähmaschine angeschraubt. Die freien Enden des Winkelansatzes an den Tragarmen weisen jetzt nach oben, so daß zwischen ihnen nun eine einstellbare Zugfeder montiert werden kann. Eine Aushebevorrichtung und Arretierung für die zum Verlängerungsansatz gehörenden zusätzlichen Mähereinheiten ist nicht vorhanden, so daß davon auszugehen ist, daß der Veriängerungsansatz für den Straßentransport demontiert werden muß. In der Funktionsweise ist sowohl das System einer Gewichtsverteilung mit einer Druckfeder als auch letzteres System mit einer Zugfeder ähnlich. Der Mangel einer derartig ausgebildeten Mähmaschine mit in Arbeitsstellung seitlich ausgebildeten Mähereinheiten und relativ kleiner Arbeitsbreite besteht zunächst darin, daß keine geeignete Vorrichtung zur Überführung und zur Arretierung der Mähereinheiten in eine vertikale, für den Straßentransport geeignete, Transportstellung vorhanden ist. Aushebe- und/oder Arretierungsvorrichtungen, mit denen es nur möglich ist, daß eine Mähereinheit manuell einseitig in eine Schräglage von etwa 45° zum Erdboden gebracht werden kann, eignen sich nicht für Trägerfahrzeuge, an denen mehrere Arbeitsgeräte miteinander kombiniert sind und hierdurch in ihrer Arbeitsstellung über große Arbeitsbreiten von mehr als neun Metern verfügen.
Ebenfalls läßt sich ein vorstehend beschriebenes in der AU-A 35452 offenbartes System einer Gewichtsverteilung zwei nebeneinander angeordneter Mähereinheiten mittels einer an Tragarmen gehalterten Druck- bzw. Zugfeder nicht bel einem Trägerfahrzeug mit zwischen den Vorder- und Hinterrädern angeordneten Arbeitsaggregaten anwenden. Bei den bekannten Systemen ist nur eine Druckfeder oder eine Zugfeder als Kraftspeicher vorhanden, so daß die Kraftrichtung zwischen den Befestigungsstellen der Druck- oder Zugfeder an den Tragarmen immer auf einer Geraden liegt. Das setzt voraus, daß zwischen den Tragarmen für den Kraftspeicher (Druck- oder Zugfeder) und dem Umfeld für kinematische Bewegungen bei sich spannendem oder entspannendem Kraftspeicher ein Freiraum vorliegen muß. Bei Trägerfahrzeugen der vorstehenden Art ist ein mittlerer Bereich, der diesem Freiraum entspricht, nicht vorhanden, da dieser vom Fahrgestell oder von Antriebselementen wie Getriebeeinheiten mit An- und Abtrieben als Bauraum benötigt wird.

Aufgabe der Erfindung ist es daher, ein Trägerfahrzeug mit einer Aufhängung für beidseitig an diesem angeordnete Arbeitsaggregate zu schaffen, mit der eine gegenseitige Anpassung der Auflagekraft der Arbeitsaggregate auf dem Erdboden in der Arbeits- und Betriebsstellung erreichbar ist. Weiterhin soll es ermöglicht werden, daß die beidseitig vom Trägerfahrzeug angebrachten Arbeitsaggregate unabhängig von einer etwaigen Schrägstellung des Trägerfahrzeuges stets mit einer an beiden Seiten gleich großen Auflagekraft auf dem Erdboden aufliegen.

Zur Lösung der gestellten Aufgabe zeichnet sich das Trägerfahrzeug mit einer Aufhängung für beidseitig an diesem angeordneten Arbeitsaggregate der vorstehend genannten Art durch die im Anspruch 1 angegebenen Merkmale aus. Hinsichtlich der weiteren Ausgestaltung der Erfindung wird auf die Ansprüche 2 bis 15 verwiesen.

Durch die Erfindung werden Möglichkeiten aufgezeigt, wie in einfacher und somit kostengünstiger Weise eine gegenseitige Anpassung der Auflagekräfte von beidseitig auch zwischen den Vorder - und Hinterrädern an einem Trägerfahrzeug angebrachten Arbeitsaggregaten auf dem Erdboden an unterschiedlichste Boden- und/oder Einsatzverhältnisse erreichbar ist. Das bedeutet, daß die Auflagekräfte, mit denen die beidseitig vom Trägerfahrzeug angebrachten Arbeitsaggregate, wie beispielsweise Mähwerke, Mulcher oder Kehrgeräte auf dem Erdboden aufliegen, an beiden Seiten immer gleich groß sind. Dabei ist es unbedeutend, ob sich das Trägerfahrzeug auf einer ebenen Fläche bewegt oder ob sich das Trägerfahrzeug in einer Schrägstellung, beispielsweise beim Durchfahren von Furchen oder Erdlöcher befindet. Die Anpassung der Auflagekräfte von den Arbeitsaggregaten auf den Erdboden bzw. auf die Grasnarbe der zu mähenden Feld- oder Wiesenfläche läßt sich optimieren, indem man die Größe der Auflagekräfte von einem Minimal- bis zu einem Maximalwert einstellbar macht.

Um die vorstehend beschriebene gegenseitige Anpassung der Auflagekräfte bei einem Trägerfahrzeug zu erreichen, ist es nach der Erfindung vorgesehen, den Auslegern zur Aufnahme der Arbeitsaggregate Kraftspeicher zuzuordnen, welche einenends an den Auslegern angelenkt und anderenends über eine am Fahrgestell des Trägerfahrzeuges sich abstützende und geführte, Anteile einer Gewichtskraft der Ausleger mit zugehörigem Arbeitsaggregat aufnehmende, Verbindungs- und Ausgleichseinrichtung miteinander gekoppelt sind, die eine zumindest annähernd quer zur Fahrtrichtung gerichtete Ausgleichbewegung bei unterschiedlicher Kraftrichtung der einzelnen Gewichtskräfte von Auslegern mit Arbeitsaggregaten zuläßt.

Bei einer einfachen Ausführungsform der Erfindung ist die Verbindungs- und Ausgleichseinrichtung als ein in etwa senkrecht angeordneter Lenker ausgebildet, der schwenkbeweglich am Fahrgestell des Trägerfahrzeuges gelagert ist und Kraftspeicher einenends am freien Ende des Lenkers in einem Stützlager drehbeweglich miteinander gekoppelt und anderenends jeweils an einem Ausleger angelenkt sind.

Bei einer weiteren einfachen Ausführungsform einer Verbindungs- und Ausgleichseinrichtung wird der Lenker von einem jeweils in den Eckbereichen schwenkbewegliche Verbindungsstellen aufweisendes dreieckförmiges Segment gebildet. Hierbei ist eine Verbindungsstelle schwenkbeweglich am Fahrgestell des Trägerfahrzeuges befestigt und die noch freien Verbindungsstellen sind jeweils mit dem einen Ende eines Kraftspeichers gekoppelt. Die freien Enden der Kraftspeicher werden wiederum jeweils an einem Ausleger angelenkt.

Eine weitere vorteilhafte Ausführungsform der Erfindung weist eine Verbindungs- und Ausgleichseinrichtung auf, die als Kurbelgetriebe ausgeführt ist, welches aus zwei am Fahrgestell des Trägerfahrzeuges schwenkbar gelagerten Lenkern sowie aus einem Verbindungslenker gebildet ist. Die an den Auslegern angelenkten Kraftspeicher sind mit ihrem anderen Ende an Verbindungsstellen zwischen den Lenkern des Kurbelgetriebes und dem Verbindungslenker schwenkbeweglich angebracht.

Eine Ausbildung der Verbindungs- und Ausgleichseinrichtung als Kurbelgetriebe ist von Vorteil, da ein vom Trägerfahrzeug selbst eingenommener und sich in einer Längsausrichtung des Trägerfahrzeuges zwischen den Auslegern für die beidseitig angeordneten Arbeitsaggregate liegender als Bauraum benötigter mittlerer Bereich, der beispielsweise vom Fahrgestell und/oder von Antriebsmitteln wie Getriebeeinheiten mit An- und Abtrieben ausgefüllt ist, mit dem Verbindungslenker durch Auswahl seiner Länge und bei entsprechender Anpassung des Abstandes der Lager- und Abstützstellen am Fahrgestell bzw. an einer fest mit dem Fahrgestell verbundenen Halterung, günstig überbrückbar ist und über die Lenker am Fahrgestell in Verbindung mit dem Verbindungslenker genügend Freiraum für die kinematischen Bewegungen bei einer Überführung der Arbeitsaggregate aus einer Arbeits- und Betriebsstellung in eine Transportstellung und zurück für die Kraftspeicher erhalten bleibt. Bei ausreichendem Frei- bzw. Bauraum zwischen den Kraftspeichern und der Verbindungs- und Ausgleichseinrichtung können ihre Lenker in einer Grundstellung im Idealfall für eine günstige Belastung derselben derart ausgerichtet am Fahrgestell gehaltert sein, daß sie in ihrer Längsausrichtung etwa auf der Winkelhalbierenden des eingeschlossenen Winkels zwischen der Kraftrichtung der Kraftspeicher und der Längsausrichtung des Verbindungslenkers liegen.
Gemäß einer weiteren vorteilhaften Ausbildung der Erfindung ist es vorgesehen, den Verbindungslenker der als Kurbelgetriebe ausgeführten Verbindungs- und Ausgleichseinrichtung in seiner Länge verstellbar auszuführen. Die Auflagekraft der Arbeitsaggregate auf dem Erdboden ist so in einfacher Weise in ihrer Größe einstellbar. Beispielsweise durch ein Umstecken eines Bolzens an dem aus einem inneren und einem äußeren Abschnitt hergestellten Verbindungslenker kann dann eine Einstellung/Verstellung der Auflagekraft beider Arbeitsaggregate vorgenommen werden. Um unzulässige Schwenkbewegungen der als Kurbelgetriebe ausgeführten Verbindungs- und Ausgleichseinrichtung auszuschließen, sind Endanschläge vorgesehen, an denen sich die Lenker des Kurbelgetriebes anlegen können.

Allgemein bilden alle Ausführungsformen einer Verbindungs- und Ausgleichseinrichtung, ob verschwenkbar oder geführt angeordnet, eine Ausgleichswaage zur gegenseitigen Anpassung der Auflagekräfte von den Arbeitsaggregaten auf dem Erdboden. Auch bei einer Schrägstellung des Trägerfahrzeuges in der Arbeitsstellung wird durch eine Verschiebe- oder Schwenkbewegung von Bauteilen der Verbindungs- und Ausgleichseinrichtung die Schrägstellung kräftemäßig ausgeglichen, indem sich in den beiden Kraftspeichern gleich große Kräfte einstellen bzw. wirksam sind.

Ein weiterer vorteilhafter Aspekt der Erfindung besteht darin, daß durch die Verbindung der vorzugsweise als Zugfedern ausgebildeten Kraftspeicher in einer sogenannten Reihenschaltung die Kraft/Weg-Kennlinie flacher wird, so daß dadurch beim Ausgleich von Bodenunebenheiten eines Arbeitsaggregates die Auflagekraft auf dem Erdboden kaum beeinflußt wird.

Eine detaillierte Beschreibung des Gegenstandes der Erfindung erfolgt nun anhand eines Ausführungsbeispieles. In der Zeichnung stellt im einzelnen dar:
- Fig.1: ein schematisch dargestelltes Trägerfahrzeug mit als Mäh- und Aufbereitungseinheiten ausgeführten Arbeitsaggregaten in einer Arbeits- und Betriebsstellung;
- Fig.2: eine vergrößerte, schematische Schnittdarstellung gemäß Schnitt II-II in Fig.1 jedoch ohne Arbeitsaggregate in einem Zustand, in dem sich die Ausleger zur Aufnahme der Arbeitsaggregate in einer Arbeits- und Betriebsstellung befinden;
- Fig.3: eine Schnittdarstellung ähnlich Fig.2 mit einem Ausleger in Arbeits- und Betriebsstellung und einem Ausleger in einer Transportstellung;
- Fig.4: ein perspektivische Darstellung eines Ausführungsbeispieles eines erfindungsgemäßen Verbindungslenkers;
- Fig.5: eine schematische Darstellung einer erfindungsgemäßen, als Kurbelgetriebe ausgeführten Verbindungs- und Ausgleichseinrichtung mit den daran angreifenden Kräften in einem Zustand, in dem sich das Trägerfahrzeug auf einer ebenen Fläche bewegt;
- Fig.6: eine Darstellung ähnlich Fig.5 in einem Zustand, in dem sich das Trägerfahrzeug in einer Schrägstellung befindet;

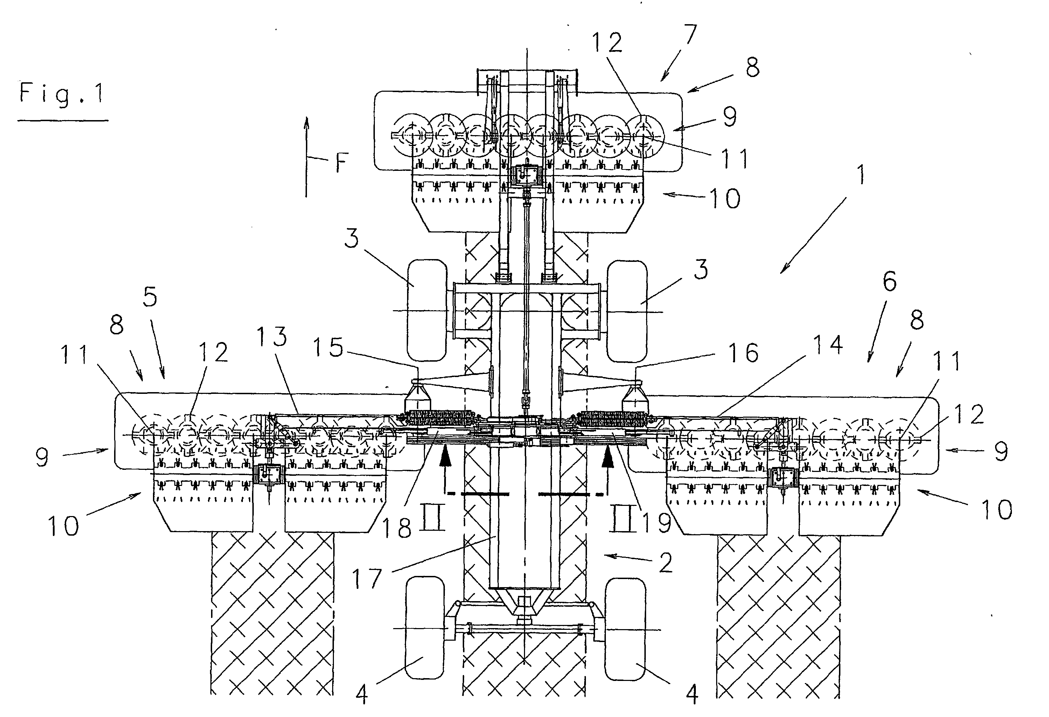

Eine mögliche Arbeitsaggregatekombination 1 ist in Fig.1 dargestellt und besteht aus beidseitig an einem selbstfahrenden Trägerfahrzeug 2 zwischen den Vorder- und Hinterräder 3,4 angeordneten Arbeitsaggregaten 5,6 und einem unmittelbar vor den Vorderrädern 3 angebrachten Arbeitsaggregat 7. Bei der Arbeitsaggregatekombination 1 handelt es sich um ein Ausführungsbeispiel, bei dem als Arbeitsaggregate 5,6,7 eine Mäh- und Aufbereitungseinheit 8 zur Ernte von landwirtschaftlichem Halmgut eingesetzt ist. Eine derartige Mäh- und Aufbereitungseinheit 8 setzt sich aus einem Mähwerk 9 sowie aus einem Aufbereiter 10 zusammen, wobei das Mähwerk 9 um in etwa vertikale Rotationachsen 11 rotierende und als Schneidelemente 12 ausgebildete Arbeitswerkzeuge umfaßt. Als Arbeitsaggregate 5,6,7 können aber auch Mulcher, Kehrgeräte oder dgl. Arbeitsaggregate mit völlig unterschiedlichen Arbeitswerkzeugen zur Anwendung kommen. Als Trägerfahrzeug 2 kann eine selbstfahrende Arbeits- und Antriebsmaschine oder auch eine von einer landwirtschaftlichen Zug- und Antriebsmaschine gezogene Fahreinheit vorgesehen sein. Aus Gründen einer besseren Übersichtlichkeit ist das Trägerfahrzeug 2 nur schematisch dargestellt.

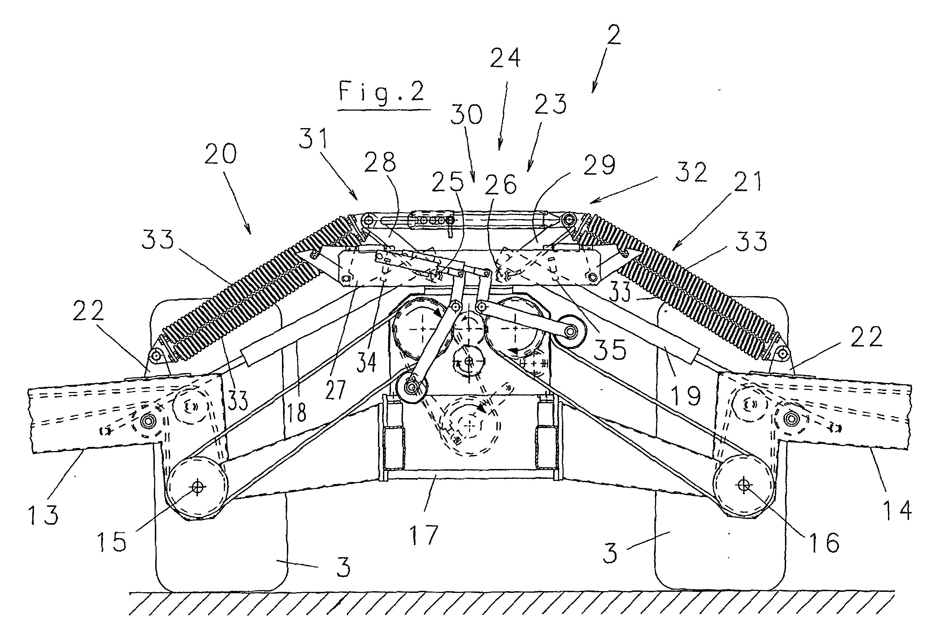

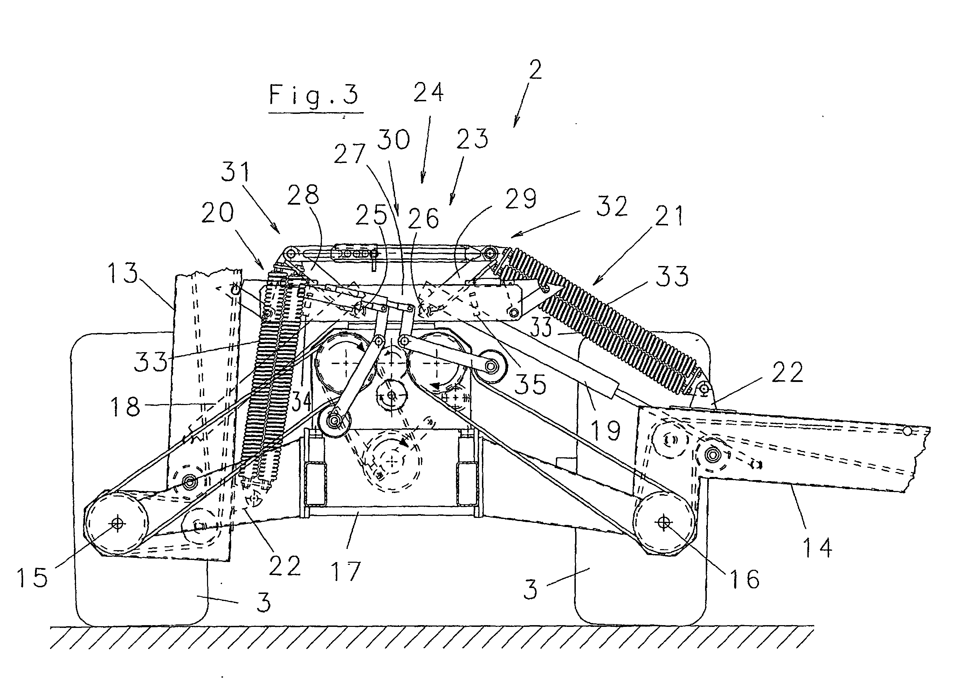

Wie weiterhin aus, der Fig.1, sowie aus Fig.2 und 3 ersichtlich ist, erfolgt die schwenkbewegliche Anbringung der Arbeitsaggregate 5,6 über Ausleger 13,14, die um Schwenkachsen 15,16 schwenkbar am Fahrgestell 17 des Trägerfahrzeuges 2 gelagert sind und mit Hilfe von eine Zug- oder Druckkraft erzeugenden Stellgliedern 18,19 aus einer in etwa horizontalen Arbeits- und Betriebsstellung in eine in etwa vertikale Transportstellung und zurück überführbar sind. Zur Bereitstellung einer optimalen Anpassung der Auflagekraft der Arbeitsaggregate 5,6 auf dem Erdboden sind den Auslegern 13,14 Kraftspeicher 20,21 zugeordnet, welche sich von einem Lagerungselement 22 an den Auslegern 13,14 zu einer Verbindungs- und Ausgleichseinrichtung 23 erstrecken. In einer vorteilhaften Ausführungsform ist die Verbindungs- und Ausgleichseinrichtung 23 so angeordnet, daß diese einen zwischen den Auslegern 13,14 befindlichen, mittleren Bereich 24 (Fig.2 und 3) des Trägerfahrzeuges 2 überbrückt. Die Verbindungs- und Ausgleichseinrichtung 23 ist dabei als Kurbelgetriebe ausgeführt, das aus zwei um Schwenkachsen 25,26 schwenkbeweglich an einer fest mit dem Fahrgestell 17 verbundenen Halterung 27 angelenkten Lenkern 28,29 sowie aus einem Verbindungslenker 30 besteht. An Verbindungsstellen 31,32 zwischen den Lenkern 28,29 und dem Verbindungslenker 30 ist in dem in Fig.2 und 3 dargestellten Ausführungsbeispiel die schwenkbewegliche Anlenkung der vorzugsweise aus vier parallel zueinander angeordneten Zugfedern 33 zusammengesetzten Kraftspeicher 20,21 an die Verbindungs- und Ausgleichseinrichtung 23 vorgesehen. Zur Vermeidung von unkontrollierten Schwenkbewegungen der Lenker 28,29 bzw. der gesamten Verbindungs- und Ausgleichseinrichtung 23 sind Endanschläge 34,35 vorgesehen, die fest an der Halterung 27 angebracht sind und die den Lenkern 28,29 als Auflage dienen.

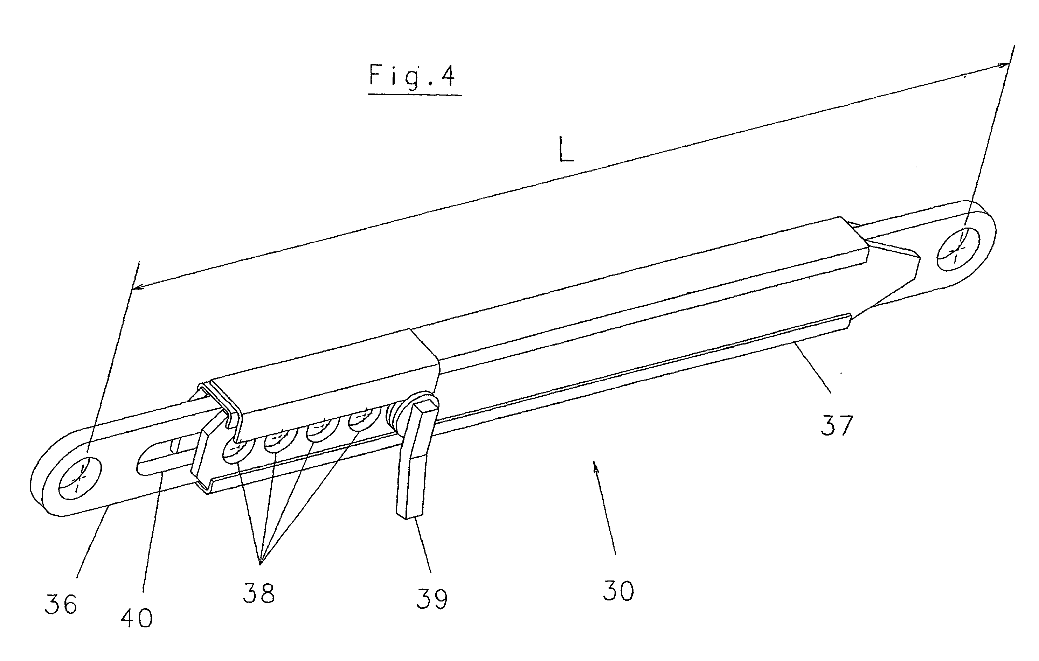

In Fig.4 ist in einer perspektivischen Darstellung der Verbindungslenker 30 näher veranschaulicht. Wie aus dieser Darstellung hervorgeht, umfaßt der Verbindungslenker 30 einen inneren Abschnitt 36 und einen äußeren Abschnitt 37, wobei beide Abschnitte 36,37 teleskopartig ineinander steckbar ausgebildet sind. Der äußere Abschnitt ist dabei mit Querbohrungen 38 versehen, so daß durch ein Umstecken eines Bolzen 39 die Länge L des Verbindungslenkers 30 veränderbar ist. Durch diese Längenänderung kann die Größe der Auflagekraft der Arbeitsaggregate 5,6 auf dem Erdboden zwischen einem Minimalwert und einem Maximalwert einge- bzw. verstellt werden. Zur Überführung der Arbeitsaggregate 5,6 aus der Arbeits- und Betriebsstellung in die Transportstellung kann es notwendig sein, daß die Länge L des Verbindungslenkers 30 selbsttätig reduzierbar ist, wobei dies vorzugsweise durch die Anbringung eines Langloches 40 im inneren Abschnitt 36 des Verbindungslenkers 30 erreichbar ist. Dieser Fall tritt dann ein, wenn die entspannte Länge der Kraftspeicher 20,21 größer ist als der kinematisch kürzeste Abstand zwischen den Lagerungselementen 22 der Ausleger 13,14 und den Verbindungsstellen 31,32 der Verbindungs- und Ausgleichseinrichtung 23. Dadurch ergibt sich eine einfache Möglichkeit, die Länge L des Verbindungslenkers 30 und damit die Größe der Auflagekraft der Arbeitsaggregate 5,6 auf dem Erdboden zu verstellen, da bei der Überführung der Arbeitsaggregate 5,6 aus der Arbeits- und Betriebsstellung in die Transportstellung oder umgekehrt die Beanspruchung der Verbindungs- und Ausgleichseinrichtung 23 für kurzen Zeitraum aufgehoben wird.

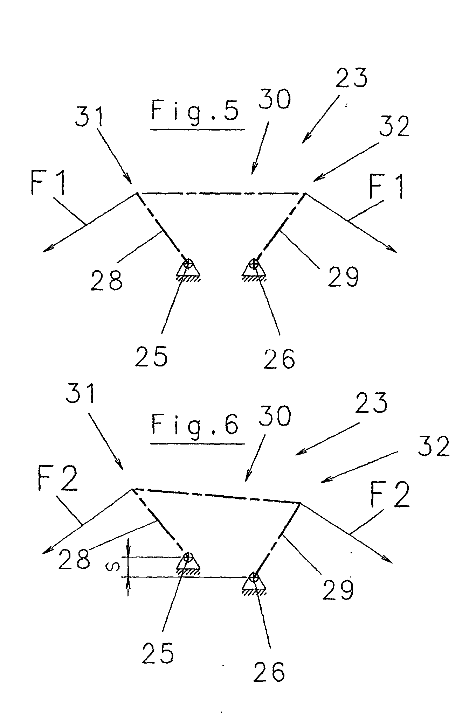

Aus den in den Figuren 5 und 6 wiedergegebenen schematischen Darstellungen geht das Funktionsprinzip der Erfindung hervor. So stellt sich beispielsweise die als Kurbelgetriebe ausgeführte Verbindungs- und Ausgleichseinrichtung 23 (Ausgleichswaage) immer so ein, daß die Kräfte F1 (Fig.5) oder F2 (Fig.6) gleich groß sind. Dabei ist unbedeutend, ob sich das Trägerfahrzeug 2 auf einer ebenen Fläche (Schwenkachsen 25,26 sind auf gleicher Höhe) oder ob sich das Trägerfahrzeug in einer Schrägstellung (Schwenkachse 25 ist gegenüber Schwenkachse 26 um den Weg S angehoben) befindet.

Obwohl eine bevorzugte Ausführungsform in den Zeichnungen und der dazugehörenden Beschreibung beschrieben wurde, sind durch aus weitere Modifikationen und Ausführungen denkbar. So kann es beispielsweise vorgesehen sein, die Verbindungs- und Ausgleichseinrichtung 23 als ein dreieckförmiges Segment oder einen in etwa vertikal angeordneten Lenker auszubilden, wobei diese dann an der fest mit dem Fahrgestell 17 des Trägerfahrzeuges 2 verbundenen Halterung 27 im mittleren Bereich 24 schwenkbeweglich gelagert sind und somit die zumindest annähernd quer zur Fahrtrichtung gerichtete Ausgleichbewegung ermöglichen.

## Patentansprüche

1. Trägerfahrzeug (2) mit einer Aufhängung für beidseitig an diesem angebrachte Arbeitsaggregate (5, 6) zur vorzugsweisen Anwendung im landwirtschaftlichen und/oder kommunalen Bereich, wobei zur höhenbeweglichen Anbringung der Arbeitsaggregate (5, 6) an jeder Längsseite am Fahrgestell (17) des Trägerfahrzeuges (2) jeweils ein um wenigstens eine in Fahrt- und Arbeitsrichtung (F) zeigende Schwenkachse (15, 16) bewegbarer Ausleger (13, 14) vorhanden ist, an dessen freiem Ende ein Arbeitsaggregat (5, 6) aufnehmbar ist und jeder Ausleger (13, 14) zusammen mit dem ihm zugehörigen Arbeitsaggregat (5 oder 6) mit Hilfe von Zug- oder Druckkraft erzeugenden Stellgliedern (18, 19) zwischen dem Fahrgestell (17) und den Auslegern (13, 14) aus einer in etwa horizontalen Arbeitsstellung in eine annähernd vertikale Transportstellung überführbar ist, **dadurch gekennzeichnet, daß** den Auslegern (13, 14) der Arbeitsaggregate (5, 6) Kraftspeicher (20, 21) zugeordnet sind, die einenends an den Auslegern (13, 14) angelenkt und anderenends über eine am Fahrgestell (17) des Trägerfahrzeuges (2) sich abstützende und geführte, Anteile einer Gewichtskraft der Ausleger (13, 14) mit zugehörigem Arbeitsaggregat (5, 6) aufnehmende, Verbindungs- und Ausgleichseinrichtung (23) miteinander gekoppelt sind und die Verbindungs- und Ausgleichseinrichtung (23) eine zumindest annähernd quer zur Fahrtrichtung (F) gerichtete Ausgleichsbewegung bei unterschiedlicher Kraftrichtung der einzelnen Gewichtskräfte (F1, F2) von Auslegern (13, 14) mit Arbeitsaggregaten (5, 6) zuläßt.

2. Trägerfahrzeug (2) nach Anspruch 1, **dadurch gekennzeichnet, daß** die Verbindungs- und Ausgleichseinrichtung (23) als ein in etwa senkrecht angeordneter Lenker ausgebildet und schwenkbeweglich am Fahrgestell (17) des Trägerfahrzeuges (2) gelagert ist und die Kraftspeicher (20, 21) einenends am freien Ende des Lenkers in einem Stützlager drehbeweglich miteinander gekoppelt und anderenends jeweils an einem Ausleger (13, 14) angelenkt sind.

3. Trägerfahrzeug (2) nach Anspruch 1, **dadurch gekennzeichnet, daß** die Verbindungs- und Ausgleichseinrichtung (23) als ein jeweils in den Eckbereichen schwenkbewegliche Verbindungsstellen aufweisendes dreieckförmiges Segment ausgeführt ist, bei dem eine Verbindungsstelle schwenkbeweglich am Fahrgestell (17) des Trägerfahrzeuges (2) abgestützt und die freien Verbindungsstellen jeweils mit dem einen Ende eines Kraftspeichers (20, 21) gekoppelt und die Kraftspeicher (20, 21) wiederum mit ihrem freien Ende jeweils an einem Ausleger (13 oder 14) angelenkt sind.

4. Trägerfahrzeug (2) nach Anspruch 1, **dadurch gekennzeichnet, daß** die Verbindungs- und Ausgleichseinrichtung (23) als ein Kurbelgetriebe ausgebildet ist, welches aus am Fahrgestell (17) des Trägerfahrzeuges (2) schwenkbar gelagerten Lenkem (28, 29) sowie aus einem Verbindungslenker (30) besteht.

5. Trägerfahrzeug (2) nach einem der Ansprüche 1 bis 4, **dadurch gekennzeichnet, daß** die Verbindungs- und Ausgleichseinrichtung (23) eine Ausgleichswaage zur Umleitung der Gewichtskraft und der Kraftrichtung von den beidseitig am Trägerfahrzeug (2) gehalterten Auslegern (13, 14) mit angehängten Arbeitsaggregaten (5, 6) sowie der Reaktionskraft der Kraftspeicher (20, 21) über den von dem Fahrgestell (17) des Trägerfahrzeuges (2) oder dessen Antriebselemente selbst als Bauraum eingenommenen mittleren Bereich (24) bildet.

6. Trägerfahrzeug (2) nach Anspruch 5, **dadurch gekennzeichnet, daß** die Gewichts- und Reaktionskräfte von der Verbindungs- und Ausgleichseinrichtung (23) über einen zwischen den Auslegern (13, 14) befindlichen und vom Fahrgestell (17) des Trägerfahrzeuges (2) oder dessen Antriebselemente selbst als Bauraum eingenommenen mittleren Bereich (24) umgeleitet werden.

7. Trägerfahrzeug (2) nach einem der Ansprüche 1 bis 6, **dadurch gekennzeichnet, daß** die Verbindungs- und Ausgleichseinrichtung (23) über eine am Trägerfahrzeug (2) befestigte Halterung (27) angelenkt ist.

8. Trägerfahrzeug (2) nach einem der Ansprüche 4 bis 7, **dadurch gekennzeichnet, daß** die Länge (L) des Verbindungslenkers (30) der Verbindungs- und Ausgleichseinrichtung (23) veränderbar ist.

9. Trägerfahrzeug (2) nach einem der Ansprüche 4 bis 8, **dadurch gekennzeichnet, daß** die Längenänderung der Länge (L) des Verbindungslenkers (30) der Verbindungs- und Ausgleichseinrichtung (23) vorzugsweise durch das Umstecken eines Bolzens (39) durchführbar ist.

10. Trägerfahrzeug (2) nach einem der Ansprüche 4 bis 9, **dadurch gekennzeichnet, daß** die Länge (L) des Verbindungslenkers (30) der Verbindungs- und Ausgleichseinrichtung (23) unter dem Einfluß einer Druckbeanspruchung selbsttätig veränderbar ist.

11. Trägerfahrzeug (2) nach einem der Ansprüche 4 bis 10, **dadurch gekennzeichnet, daß** der Verbindungslenker (30) der Verbindungs- und Ausgleichseinrichtung (23) aus einem inneren Abschnitt (36) und einem äußeren Abschnitt (37 besteht, wobei beide Abschnitte (36, 37) teleskopartig ineinander steckbar ausgebildet sind.

12. Trägerfahrzeug (2) nach einem der Ansprüche 4 bis 11, **dadurch gekennzeichnet, daß** die Kraftspeicher (20, 21) einenends an Verbindungsstellen (31, 32) zwischen den Lenkern (28, 29) und dem Verbindungslenker (30) um Schwenkachsen (25, 26) der Verbindungs- und Ausgleichseinrichtung (23) schwenkbeweglich angelenkt und anderenends jeweils an einem Ausleger (13 oder 14) schwenkbeweglich gehaltert sind.

13. Trägerfahrzeug (2) nach einem der Ansprüche 1 bis 12, **dadurch gekennzeichnet, daß** die Kraftspeicher (20, 21) der Aufhängung für die beidseitig am Trägerfahrzeug (2) angebrachten Arbeitsaggregate (5, 6) vorzugsweise jeweils aus vier parallel zueinander angeordneten Zugfedern (33) bestehen.

14. Trägerfahrzeug (2) nach einem der Ansprüche 2, 3 und 4, **dadurch gekennzeichnet, daß** zur Begrenzung der Schwenkbewegung der Verbindungs- und Ausgleichseinrichtung (23) Endanschläge vorgesehen sind.

15. Trägerfahrzeug (2) nach den Ansprüchen 4 und 14, dadurch oekennzeichnet, daß zur Begrenzung der Schwenkbewegung der Lenker (28, 29) der als Kurbelgetriebe ausgebildeten Verbindungsund Ausgleichseinrichtung (23) Endanschläge (34, 35) an der Halterung (27) vorgesehen sind.

## Claims

1. Support vehicle (2) with a suspension device for working implements (5, 6) attached to each side of the vehicle preferably for agricultural or municipal use, whereby in order to provide means for raising the height of the working implements (5, 6) at least one movable boom (13, 14) is provided on each side of the chassis (17) of the support vehicle (2) which is capable of rotating about a rotation axis (15, 16) aligned in the travel- and working direction (F) such that a working implement (5, 6) can be accepted at its free end and that each boom (13, 14) together with the working implement (5, 6) attached to it can be transferred from an approximately horizontal position to an approximately vertical travelling position with the help of positioning arms (18, 19) between the chassis (17) and the booms (13, 14) which provide either a tension or compressive force **characterised in that** the booms (13, 14) for the working implements (5, 6) are provided with power accumulators (20, 21) which are attached by linked joints to one end of the booms (13, 14) while the other end is coupled to a connecting and balancing facility (23) supported and guided by the chassis (17) of the support vehicle (2) which accepts part of the weight of the booms (13, 14) with their associated working implements (5, 6) and the connecting and balancing facility (23) permits an approximate balancing movement at least approximately at right angles to the direction of travel (F) when the lines of force (F1, F2) of the individual weights represented by the booms (13, 14) together with the working implements (5, 6) are dissimilar.

2. Support vehicle (2) in accordance with claim 1, **characterised in that** the connecting and balancing facility (23) takes the form of an almost vertically arranged connecting arm mounted on the chassis (17) of the support vehicle (2) so as to permit a swinging movement and that the force accumulators (20, 21) are coupled at one end to the free end of the connecting arm in a support bearing in a manner permitting a swinging movement and at the other end are coupled respectively to a boom (13, 14):

3. Support vehicle (2) in accordance with claim 1, **characterised in that** the connecting and balancing facility (23) is constructed as a triangular-shaped segment capable of a swinging movement and exhibiting connecting points in the respective corners such that one connecting point is supported by the chassis (17) of the support vehicle (2) in a manner permitting a swinging movement while each of the free connection points is coupled with one end of a power accumulator (20, 21) with the free end of the power accumulator articulating with a boom (13 or 14).

4. Support vehicle (2) in accordance with claim 1 **characterised in that** the connecting and balancing facility (23) has the form of a crank mechanism which consists of connecting arms (28, 29) mounted on the chassis (17) of the support vehicle (2) in a manner permitting a swinging movement together with a connecting bar (30).

5. Support vehicle (2) in accordance with one of the claims 1 to 4, **characterised in that** the connecting and balancing facility (23) constitutes a balancing system for diverting the weight forces and the direction of those forces generated by the booms (13, 14) plus the attached working implements (5, 6) carried on both sides of the support vehicle (2), and the reaction force of the power accumulators (20, 21) through the central area (24) of the support vehicle (2) forming a construction space occupied by the chassis (17) or its drive elements.

6. Support vehicle (2) in accordance with claim 5, **characterised in that** the weight and reaction forces of the connecting and balancing facility (23) are diverted through a central area (24) located between the booms (13, 14) and forming a construction space occupied by the chassis (17) of the support vehicle (2) or its drive elements.

7. Support vehicle (2) in accordance with one of claims 1 to 6, **characterised in that** the connecting and balancing facility (23) articulates with a holding fixture (27) attached to the support vehicle (2).

8. Support vehicle (2) in accordance with one of claims 4 to 7, **characterised in that** the length (L) of the connecting bar (30) of the connecting and balancing facility (23) is adjustable.

9. Support vehicle (2) in accordance with one of claims 4 to 8, **characterised in that** the adjustment of the length (L) of the connecting bar (30) of the connecting and balancing facility (23) is preferably carried out by changing the position of a bolt (39).

10. Support vehicle (2) in accordance with one of claims 4 to 9, **characterised in that** the length (L) of the connecting bar (30) of the connecting and balancing facility (23) can change automatically under the influence of pressure.

11. Support vehicle (2) in accordance with one of claims 4 to 10, **characterised in that** the connecting bar (30) of the connecting and balancing facility (23) consists of an inner element (36) and an outer element (37) such that both elements (36, 37) can be telescoped into one another.

12. Support vehicle (2) in accordance with one of claims 4 to 11, **characterised in that** the force accumulators (20, 21) articulate at one end with connecting locations (31, 32) between the connecting arms (28, 29) and the connecting bar (30) around axes permitting a swinging movement (25, 26) in the connecting and balancing facility (23) while the other end is attached to a boom in a manner permitting a swinging movement.

13. Support vehicle (2) in accordance with one of claims 1 to 12, **characterised in that** the force accumulators (20, 21) of the suspension for the working implements carried on each side of the support vehicle (2) consist each, preferably, of four tension springs (33) arranged parallel to one another.

14. Support vehicle (2) in accordance with one of claims 2, 3 and 4, **characterised in that** end stops are provided to limit the extent of the swinging movement of the connecting and balancing facility (23).

15. Support vehicle (2) in accordance with claims 4 and 14, **characterised in that** end stops (34, 35) are provided on the holding fixture (27) to limit the extent of the swinging movement of the connecting arms (28, 29) of the connecting and balancing facility (23) having the form of a crank system.

## Revendications

1. Véhicule porteur (2) comportant un moyen de suspension pour recevoir des deux côtés un équipement (5, 6), notamment destiné à des applications agricoles et/ou des travaux communaux, selon lequel, pour le montage mobile en hauteur des équipements (5, 6), sur chaque grand côté du châssis (17) du véhicule (2), il est prévu au moins un bras (13, 14) mobile autour d'au moins un axe de basculement (15, 16) dirigé dans la direction de déplacement et de travail (F), et dont l'extrémité libre reçoit un équipement (5, 6),
chaque bras (13, 14) et l'équipement correspondant (5 ou 6) pouvant être déplacés par des actionneurs (18, 19) engendrant des forces de traction ou de compression, installés entre le châssis (17) et les bras (13, 14), d'une position de travail horizontale dans une position de transport sensiblement verticale,
**caractérisé en ce que**
des accumulateurs de force (20, 21) sont associés au bras (13, 14) des équipements (5, 6), ces accumulateurs sont articulés à une extrémité au bras (13, 14) et, par l'autre extrémité, à une installation de liaison et de compensation (23), s'appuyant sur le châssis (17) du véhicule (2) en étant guidée par celui-ci et recevant des parties du poids des bras (13, 14) et des équipements (5, 6), et
cette installation (23) autorise un mouvement de compensation dirigé au moins sensiblement transversalement à la direction de déplacement (F) pour une direction différente des forces (F1, F2) des poids des bras (13, 14) avec les équipements (5, 6).

2. Véhicule porteur (2) selon la revendication 1,
**caractérisé en ce que**
l'installation de liaison et de compensation (23) est réalisée sous la forme d'un bras sensiblement vertical, monté de manière pivotante sur le châssis (17) du véhicule (2), et les accumulateurs de force (20, 21) sont couplés de manière mobile en rotation par une extrémité à l'extrémité libre des bras dans un palier d'appui et par l'autre extrémité chaque fois à un bras (13, 14).

3. Véhicule porteur (2) selon la revendication 1,
**caractérisé en ce que**
l'installation de liaison et de compensation (23) est réalisée comme un segment de forme triangulaire comportant au niveau des coins des points de liaison mobiles en pivotement, et pour ce segment, un point de liaison est appuyé de manière mobile en pivotement sur le châssis (17) du véhicule porteur (2), les points de liaison libres sont couplés respectivement à une extrémité d'un accumulateur de force (20, 21), et les accumulateurs de force (20, 21) sont articulés par leur extrémité libre chaque fois à un bras (13) ou (14).

4. Véhicule porteur (2) selon la revendication 1,
**caractérisé en ce que**
l'installation de liaison et de compensation (23) est réalisée sous la forme d'une transmission à manivelle composée de deux bras (28, 29) articulés de manière pivotante sur le châssis (17) du véhicule (2) ainsi que d'un bras de liaison (30).

5. Véhicule porteur (2) selon l'une quelconque des revendications 1 à 4,
**caractérisé en ce que**
l'installation de liaison et de compensation (23) forme une balance d'équilibrage pour dévier la force du poids et la direction de la force des bras (13, 14) montés des deux côtés sur le véhicule (2), et des équipements (5, 6) accrochés à ceux-ci, ainsi que la force de réaction de l'accumulateur de force (20, 21) sur la zone intermédiaire (24) prise par le châssis (17) du véhicule (2) ou ses éléments d'entraînement eux-mêmes comme volume de construction.

6. Véhicule porteur (2) selon la revendication 5,
**caractérisé en ce que**
les forces de poids et de réaction de l'installation de liaison et d'équilibrage (23) sont déviées par une zone intermédiaire (24) entre les bras (13, 14) et le châssis (17) du véhicule (2) ou ses éléments d'entraînement eux-mêmes, comme volume de construction.

7. Véhicule porteur (2) selon l'une quelconque des revendications 1 à 6,
**caractérisé en ce que**
l'installation de liaison et de compensation (23) est articulée par un moyen de support (27) fixé au véhicule (2).

8. Véhicule porteur (2) selon l'une quelconque des revendications 4 à 7,
**caractérisé en ce que**
la longueur (L) du bras de liaison (30) de l'installation de liaison et de compensation (23) est variable.

9. Véhicule porteur (2) selon l'une quelconque des revendications 4 à 8,
**caractérisé en ce que**
la variation de longueur (L) du bras de liaison (30) de l'installation (23) peut se faire de préférence par le déplacement d'un goujon (39).

10. Véhicule porteur (2) selon l'une quelconque des revendications 4 à 9,
**caractérisé en ce que**
la longueur (L) du bras de liaison (30) de l'installation de liaison et de compensation (23) est variable automatiquement sous l'action d'une contrainte de pression.

11. Véhicule porteur (2) selon l'une quelconque des revendications 4 à 10,
**caractérisé en ce que**
le bras de liaison (30) de l'installation de liaison et de compensation (23) se compose d'un segment intérieur (36) et d'un segment extérieur (37), ces deux segments (36, 37) étant engagés de manière télescopique l'un par rapport à l'autre.

12. Véhicule porteur (2) selon l'une quelconque des revendications 4 à 11,
**caractérisé en ce que**
les accumulateurs de force (20, 21) sont articulés de manière mobile en pivotement par une extrémité aux points de liaison (31, 32) entre les bras (28, 29) et le bras de liaison (30) autour d'axes de pivotement (25, 26) de l'installation de liaison et de compensation (23), et par l'autre extrémité chaque fois à un bras (13 ou 14) par une fixation mobile en pivotement.

13. Véhicule porteur (2) selon l'une quelconque des revendications 1 à 12,
**caractérisé en ce que**
les accumulateurs de force (20, 21) de la suspension des équipements (5, 6) prévus de chaque côté du véhicule (2) sont formés de préférence chaque fois de quatre ressorts de traction (33) en parallèle.

14. Véhicule porteur (2) selon l'une quelconque des revendications 2, 3, ou4,
**caractérisé par**
des butées de fin de course limitant le mouvement de pivotement de l'installation de liaison et de compensation (23).

15. Véhicule porteur (2) selon l'une quelconque des revendications 4 et 14,
**caractérisé par**
des butées de fin de course (34, 35) prévues sur le support (27) pour limiter le mouvement de pivotement des bras (28, 29) de l'installation de liaison et de compensation (23) réalisée sous la forme d'une transmission à manivelle.
